# EUROPÄISCHE PATENTSCHRIFT

(11) **EP 1 140 728 B1**
(45) Veröffentlichungstag und Bekanntmachung des Hinweises auf die Patenterteilung: **03.03.2004**
(21) Anmeldenummer: 99965479.1
(22) Anmeldetag: 16.12.1999
(51) Int. Cl.: C04B 30/02, B32B 18/00, F16L 59/00, E04B 1/76

(54) **MIKROPORÖSER WÄRMEDÄMMKÖRPER**
MICROPOROUS HEAT-INSULATING BODY
CORPS THERMO-ISOLANT MICROPOREUX

(30) Priorität: 19.12.1998 DE 19859084; 16.10.1999 DE 19950051
(43) Veröffentlichungstag der Anmeldung: 10.10.2001
(73) Patentinhaber: PROMAT INTERNATIONAL N.V., 2830 Tisselt (BE)
(72) Erfinder: ANTON, Octavian, B-1020 Brüssel (BE); OPSOMMER, Ann, B-1800 Koningslo (BE)
(74) Vertreter: Werner, Hans-Karsten, Dr.Dipl.-Chem.
(86) Internationale Anmeldenummer: PCT/EP1999/010001
(87) Internationale Veröffentlichungsnummer: WO 2000/037388

(56) Entgegenhaltungen:
- EP-A- 0 829 346
- WO-A-98/26928
- DE-A- 4 106 727
- US-A- 3 915 725
- US-A- 5 399 397
- PATENT ABSTRACTS OF JAPAN vol. 1999, no. 12, 29. Oktober 1999 (1999-10-29) & JP 11 185939 A (MATSUSHITA ELECTRIC IND CO LTD;TAIHEIYO CEMENT CORP), 9. Juli 1999 (1999-07-09)

## Beschreibung

Gegenstand der vorliegenden Erfindung ist ein mikroporöser Wärmedämmkörper bestehend aus einem Kern aus verpressten Wärmedämmmaterial enthaltend 30 bis 90 Gew.% feinteiliges Metalloxid und weitere Zusätze, bei welchem eine oder beide Oberflächen eine Abdeckung aus hitzebeständigem Material aufweisen.

Wärmedämmkörper sind beispielsweise beschrieben in der EP-A-0618 399, wobei jedoch gefordert wird, dass zumindest eine Oberfläche des Formkörpers Kanalporen mit einer Grundfläche der Pore von 0,01 bis 8mm² und einer Eindringtiefe von 5 bis 100 % bezogen auf die Dicke des Formkörpers aufweist und wobei pro 1cm² der Formkörperoberfläche 0,004 bis 10 Kanalporen enthalten sind.

Diese Wärmedämmkörper werden hergestellt durch trockenes Verpressen und anschließendes Sintern bei Temperaturen von 500 bis 900° C, wobei die Kanalporen erzeugt werden durch Bohren, Stanzen oder Fräsen sowie vorzugsweise durch Prägestempel. Durch diese Maßnahmen gelingt es, den beim raschen Erhitzen explosionsartig entweichenden Wasserdampf so abzuleiten, daß es nicht zur Zerstörung des Wärmedämmkörpers kommt.

Die Nachteile dieser Wärmedämmkörper sind das umständliche Herstellungsverfahren sowie die Verschlechterung der Wärmedämmeigenschaften, durch die Konvektion der Gase in den Poren.

Ein weiteres Verfahren zur Herstellung eines mikroporösen Körpers ist beschrieben in der EP-A- 0 623 567, bei welcher Oxide, Hydroxide und Carbonate der Metalle der 2. Hauptgruppe zusammen mit pyrogen hergestelltem SiO₂ sowie gegebenenfalls Al₂O₃ sowie einem Trübungsmittel und einer organischen Faser miteinander verpreßt und dann bei Temperaturen über 700° C gesintert werden. Dieses Verfahren ist nicht nur aufwendig, sondern weist darüber hinaus den Nachteil auf, daß das Wiederabkühlen dieses gut isolierenden Materials lange Zeit beansprucht.

Die Wärmedämmkörper unter Verwendung von hoch temperaturbeständigen Klebstoffen sowie einer Trübe, einem Kieselsol und einem Ton sind in der DE-C-40 20 771 beschrieben. Hierin ist auch weiterer Stand der Technik betreffend Herstellung und Zusammensetzung von Wärmedämmkörpern beschrieben. Der Nachteil aller Wärmedämmkörper mit organischen Bestandteilen und insbesondere organischem Fasermaterial besteht darin, dass diese bei sehr hohen Temperaturen verbrennen und unerwünschte Gasentwicklung aufweisen.

Die DE 41 06 727 beschreibt Wärmedämmkörper mit einer Umhüllung aus Kunststoffolie, wobei speziell schrumpffähige Kunststofffolien verwendet werden sollen. Auch diese Wärmedämmkörper enthalten noch organisches Material und verlieren im Falle sehr hoher Erhitzung ihre Formbeständigkeit.

Die DE-C- 42 02 569 beschreibt Formwerkzeuge zum Pressen von Wärmedämmkörpern, insbesondere für elektrische Strahlungsheizkörper wie Kochplatten.

Die EP-A-686 732 beschreibt Wärmedämmplatten, die trocken verpreßt werden und innen und außen aus verschiedenem Material bestehen, die zu ihrer Stabilisierung Öffnungen aufweisen, die durchgehend aus dem äußeren Material bestehen. Auch diese Platten sind nur schwer herstellbar und weisen weder von der mechanischen Stabilität noch von ihren Wärmeisoliereigenschaften optimale Eigenschaften auf.

Ein weiterer Nachteil dieser Wärmedämmplatten ist, dass es schwierig ist, sie so zu schneiden und zu bearbeiten, dass die äußeren Schichten nicht beschädigt werden, es sei denn, es werden sehr teure Werkzeuge wie Laserschneider verwendet, da diese in der Lage sind, die neu entstehenden Schnittkanten glasig zu sintern.

Aus der DE 36 21 705 ist ein Verfahren bekannt zur Herstellung von flächenförmig miteinander verfilzten und vemetzten Primärkristallen vom Xonotlittyp und ihre Verwendung. Die bisher bekannten hohlkugelförmigen Teilchen mit geringer Dichte sind bereits zur Herstellung von leichtgewichtigen thermischen Isolierkörpern eingesetzt worden. Xonotlitkristalle, auch im verpressten Zustand besitzen jedoch nicht die guten thermischen Isoliereigenschaften wie trocken verpresste Metalloxide.

Ein weiterer Versuch, die Probleme bei der Herstellung von Wärmdämmplatten zu lösen und dabei zu optimalen Eigenschaften zu kommen, ist beschrieben in der EP 0 829 346, in welcher ebenfalls noch einmal die Schwierigkeiten und Nachteile des Standes der Technik zusammengestellt sind.

Ein wesentliches Problem bei der Herstellung von Wärmedämmkörpern durch trockenes Verpressen der Bestandteile besteht darin, dass diese Materialien nach dem Verpressen dazu neigen, zurückzufedern und sich wieder auszudehnen, so dass zumindest mit sehr hohen Drucken gearbeitet werden muss, um einigermaßen brauchbare Ergebnisse zu erzielen.

Durch den Zusatz von Fasermaterial lässt sich zwar die Biegefestigkeit der Wärmedämmplatten verbessern, jedoch führen höhere Mengen an Fasern in der Tendenz zur Delaminierung und verschlechtern die Kohärenz der verpressten Mischung während des kritischen Schrittes der Entformung.

Auf alle Fälle sollten die Wärmedämmplatten keine organischen und brennbaren Bestandteile enthalten, die beim hohen Erhitzen zur Entwicklung von teilweise auch toxischen Gasen führen können. Schließlich sollen die fertigen Wärmedämmkörper auch leicht und problemlos bearbeitet und verarbeitet werden können, so sollen sie beispielsweise problemlos gesägt, geschnitten und gebohrt werden können, wobei kein unerwünschter Staub anfallen soll.

Schließlich ist in vielen Fällen erwünscht, dass die Wärmedämmkörper gute elektrische Isolatoren sind, es gibt jedoch Anwendungsfälle, in denen es erwünscht ist, dass zumindest eine der Oberflächen elektrische Leitfähigkeit aufweist, um elektrostatische Aufladungen ableiten zu können.

All diese Aufgaben sind gelöst worden durch mikroporöse Wärmedämmkörper, bestehend aus verpresstem Wärmedämmmaterial enthaltend 30 bis 90 Gew.-% feinteiliges Metalloxid, 0 bis 30 Gew.-% Trübungsmittel, 0 bis 10 Gew.-% anorganisches Fasermaterial und 0 bis 15 Gew.-% anorganisches Bindemittel, wobei der Körper zusätzlich 2 bis 45 Gew.%, vorzugsweise 5 bis 15 Gew.% Xonotlit enthält. Diese Wärmedämmkörper sind Gegenstand der DE 198 59 084.9.

Vorzugsweise weist dieser mikroporöser Wärmedämmkörper auf einen oder beiden Oberflächen eine Abdeckung aus hitzebeständigem Material auf. Besonders bevorzugt sind Abdeckungen, die gleich oder verschieden sind und aus vorgepresstem Xonotlit, vorgefertigten Folien aus Glimmer oder Graphit bestehen. Bei Verwendung von Xonotlit und/oder Glimmer entstehen Abdeckungen, die gute elektrische Isolatoren sind. Bei Verwendung von Graphit entsteht eine Abdeckung, die elektrisch so weit leitend ist, dass sie zumindest elektrostatische Aufladungen ableiten kann. Bei gewissen Anwendungen kann es somit von Vorteil sein, die eine Seite der Abdeckung aus Xonotlit und/oder Glimmer und die andere Abdeckung aus Graphit herzustellen.

Es wurde jetzt festgestellt, dass die Abdeckung mikroporöser Wärmedämmkörper mit vorgefertigten Folien aus Glimmer die Eigenschaften der Wärmedämmkörper in zweierlei Hinsicht erheblich verbessert, und zwar sowohl bezüglich der Wärmeleitfähigkeit als auch der mechanischen Eigenschaften, insbesondere der Biegefestigkeit. Dies ist zunächst festgestellt worden bei internen Erprobungen der mikroporösen Wärmedämmkörper gemäß DE 198 59 084.9. Es wurde aber darüber hinaus festgestellt, dass eine Abdeckung mit vorgefertigten Folien aus Glimmer auch andere mikroporöse Wärmedämmkörper erheblich verbessert. Gegenstand der vorliegenden Erfindung ist somit ein mikroporöser Wärmedämmkörper bestehend aus einem Kern aus verpresstem Wärmedämmmaterial enthaltend 30 bis 90 Gew.% feinteiliges Metalloxid und weitere Zusätze, bei welchem eine oder beide Oberflächen eine Abdeckung aus hitzebeständigem Material aufweisen, dadurch gekennzeichnet, dass die Abdeckung gleich oder verschieden ist und mindestens eine Seite aus vorgefertigten Folien aus Glimmer besteht.

Vorzugsweise besteht die Abdeckung auf beiden Seiten aus einer vorgefertigten Folie aus Glimmer.

Der Kern enthält wiederum vorzugsweise 0 bis 30 Gew.% Trübungsmittel, 0 bis 10 Gew.% Fasermaterial und 0 bis 15 Gew.% anorganisches Bindemittel, wobei anorganisches Fasermaterial bevorzugt ist.

Die besseren mechanischen Eigenschaften machen sich vor allem bemerkbar bei Wärmedämmkörpern, die aufgrund ihrer Dicke noch eine deutliche Flexibilität aufweisen. Besonders bevorzugt sind somit Wärmedämmkörper, die eine Dicke von 3 bis 10 mm, vorzugsweise 5 bis 7 mm aufweisen.

Besonders bewährt haben sich darüber hinaus solche Wärmedämmkörper, bei denen die Abdeckung mit dem Kern verklebt ist. Als Klebemittel kommen sowohl anorganische Kleber wie Wasserglas als auch organische Kleber in Frage, wie Polyvinylacetat. Die geringen Mengen organischer Substanz, die dabei verarbeitet werden, beeinträchtigen die Eigenschaften der fertigen mikroporösen Wärmedämmkörper beim Erhitzen praktisch nicht.

Anstelle einer Verklebung ist es aber auch prinzipiell möglich, den Kern und die Glimmerfolien miteinander in eine Folie einzuschweißen, insbesondere eine Schrumpffolie. Derartige mikroporöse Wärmedämmkörper weisen ebenfalls eine verbesserte Wärmedämmung auf und sind mechanisch stabiler und besitzen eine bessere Biegefestigkeit als die Produkte beispielsweise gemäß der EP-A- 0 829 346.

In den nachfolgenden Beispielen und Vergleichsbeispielen ist die Erfindung näher erläutert.

### Beispiel 1

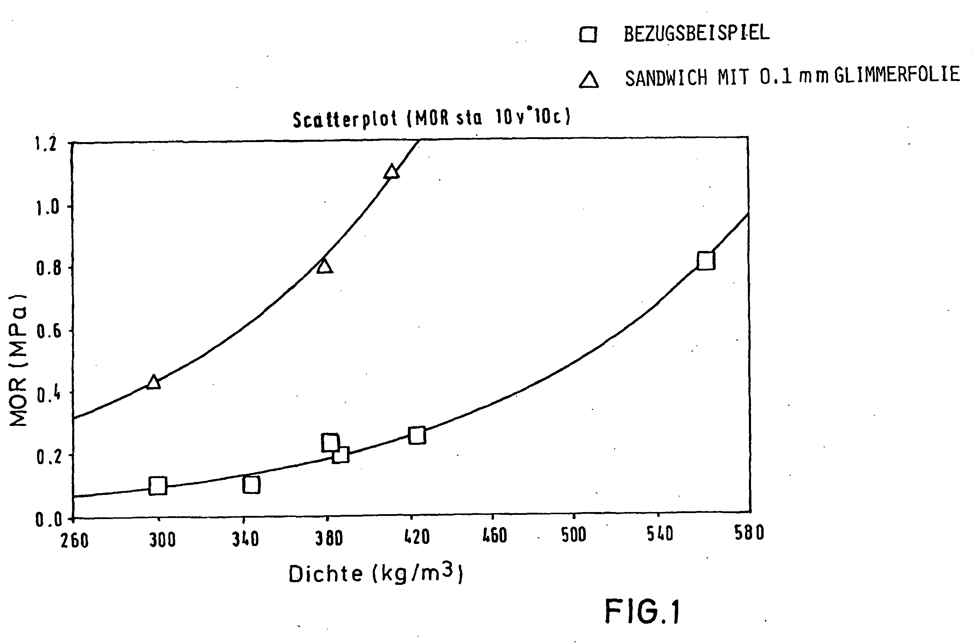

Ein Gemisch aus 63 Gew.% pyrogener Kieselsäure, 30 Gew.% Rutil, 2 Gew.% Silika-Fasern (6 mm Länge) und 5 Gew.% synthetischen Xonotlit wurden trocken in einem Zwangsmischer vermischt und dann trocken in einer Metallform verpresst, wobei der Pressdruck zwischen 0,9 und 7,0 MPa variiert wurde. Es wurden so Platten mit Dichten zwischen 300 und 560 kg/m³ erhalten. Die Biegefestigkeit variierte von 0,1 MPa bis 0,8 MPa in Abhängigkeit von der Dichte. Die Werte sind in Figur 1 dargestellt.

Weiterhin wurden die Lambda-Werte (thermische Leitfähigkeit in W/(m°K)) bestimmt unter Benutzung einer geschützten heißen Platte gemäß DIN 52 612 in Abhängigkeit von der Temperatur.

Die oben beschriebenen Platten wurden auf beiden Seiten mit einer 0,1 mm dicken Folie aus Glimmer beschichtet und mit einem handelüblichen organischen Kleber aus Basis von PVA (Polyvinylacetat) verklebt. Die Glimmerfolien sind ein Handelsprodukt der Firma Cogebi, Belgien.

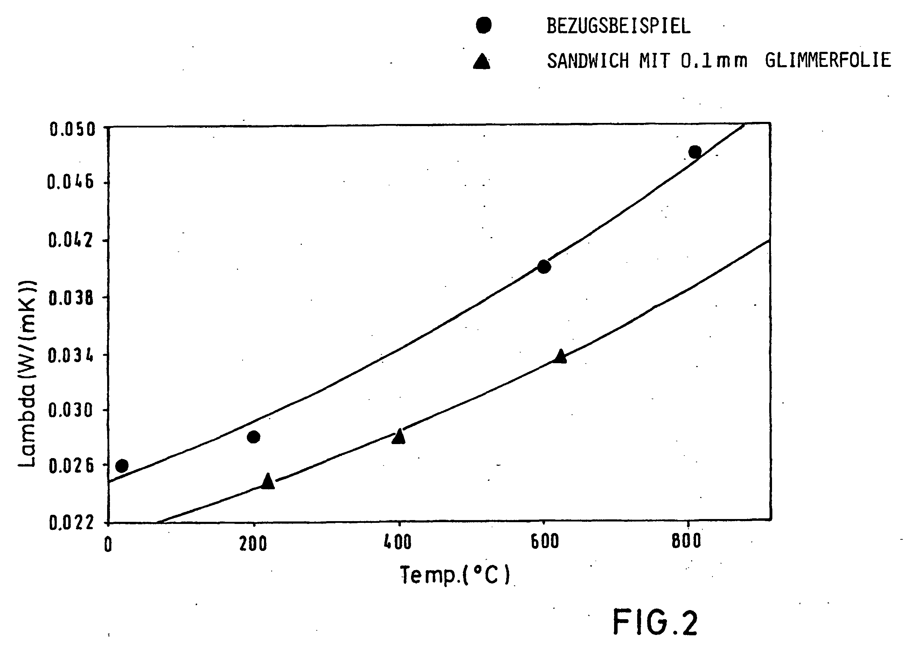

Die so erhaltenen Platten wurden wiederum auf Biegefestigkeit und thermische Leitfähigkeit untersucht. Die Ergebnisse sind in den folgenden Tabellen zusammengestellt und in den Figuren 1 und 2 dargestellt:

| **Bezugsbeispiel** | | **Sandwich mit 0.1 mm Glimmerfolie** | |
|---|---|---|---|
| **Dichte** **(kg/m**^{**3**}**)** | **Biegefestigkeit** **(MPa)** | **Dichte** **(kg/m**^{**3**}**)** | **Biegefestigkeit** **(MPa)** |
| 300 | 0.10 | 298 | .43 |
| 387 | 0.19 | 379 | .80 |
| 382 | 0.23 | 412 | 1.10 |
| 344 | 0.10 | | |
| 424 | 0.25 | | |
| 560 | 0.80 | | |

| **Bezugsbeispiel** | | **Sandwich mit 0.1 mm Glimmerfolie** | |
|---|---|---|---|
| **Temperatur** **(°C)** | **λ** **(W/(m°K))** | **Temperatur** **(°C)** | **λ** **(W/(m°K))** |
| 20 | 0.026 | 220 | .025 |
| 200 | 0.028 | 620 | .034 |
| 600 | 0.040 | 400 | .028 |
| 800 | 0.048 | | |

## Patentansprüche

1. Mikroporöser Wärmedämmkörper bestehend aus einem Kern aus verpresstem Wärmedämmmaterial enthaltend 30 bis 90 Gew.-% feinteiliges Metalloxid und weitere Zusätze, bei welchem eine oder beide Oberflächen eine Abdeckung aus hitzebeständigem Material aufweisen, **dadurch gekennzeichnet, dass** die Abdeckung gleich oder verschieden ist und mindestens eine Seite aus vorgefertigten Folien aus Glimmer besteht und
- die Abdeckung mit dem Kern verklebt ist
- oder der Kern und die Abdeckung in eine Folie eingeschweißt ist.

2. Mikroporöser Wärmedämmkörper gemäß Anspruch 1, **dadurch gekennzeichnet, dass** die Abdeckung auf beiden Seiten aus einer vorgefertigten Folie aus Glimmer besteht.

3. Mikroporöser Wärmedämmkörper gemäß Anspruch 1 oder 2, **dadurch gekennzeichnet, dass** die weiteren Zusätze 0 bis 30 Gew.% Trübungsmittel, 0 bis 10 Gew.% Fasermaterial und 0 bis 15 Gew.% anorganisches Bindemittel sind.

4. Mikroporöser Wärmedämmkörper gemäß einem der Ansprüche 1 bis 3, **dadurch gekennzeichnet, dass** der Kern 2 bis 45 Gew.%, vorzugsweise 5 bis 15 Gew.% Xonotlit enthält.

5. Mikroporöser Wärmedämmkörper gemäß einem der Ansprüche 1 bis 4, **dadurch gekennzeichnet, dass** der Kern eine Dicke von 3 bis 10 mm, vorzugsweise 5 bis 7 mm aufweist.

6. Verfahren zur Herstellung eines mikroporösen Wärmedämmkörpers bestehend aus einem Kern aus verpresstem Wärmedämmmaterial enthaltend 30 bis 90 Gew.% feinteiliges Metalloxid und weitere Zusätze, bei welchen eine oder beide Oberflächen eine Abdeckung aus hitzebeständigem Material aufweisen, mindestens eine Abdeckung aus Glimmer besteht, **dadurch gekennzeichnet, dass** der Glimmer eine vorgefertigte Folie ist, die mit dem Kern verbunden wird.

7. Verfahren gemäß Anspruch 6, **dadurch gekennzeichnet, dass** die Abdeckung auf beiden Seiten aus einer vorgefertigten Folie aus Glimmer besteht.

8. Verfahren gemäß Anspruch 6 oder 7, **dadurch gekennzeichnet, dass** die weiteren Zusätze 0 bis 30 Gew.% Trübungsmittel, 0 bis 10 Gew.% Fasermaterial und 0 bis 15 Gew.% anorganisches Bindemittel sind.

9. Verfahren gemäß einem der Ansprüche 6 bis 8, **dadurch gekennzeichnet, dass** der Kern 2 bis 45 Gew.%, vorzugsweise 5 bis 15 Gew.% Xonotlit enthält.

10. Verfahren gemäß einem der Ansprüche 6 bis 9, **dadurch gekennzeichnet, dass** der Kern eine Dicke von 3 bis 10 mm, vorzugsweise 5 bis 7 mm aufweist.

11. Verfahren gemäß einem der Ansprüche 6 bis 10, **dadurch gekennzeichnet, dass** die Abdeckung mit dem Kern verklebt ist oder der Kern und die Abdeckung in eine Folie eingeschweißt ist.

## Claims

1. A microporous heat insulation body consisting of a core of a compressed heat insulation material containing from 30 to 90% by weight of a finely divided metal oxide and further additives, wherein one or both surfaces thereof have a cover of a heat-resistant material, **characterized in that** the covers are the same or different and at least one side consists of prefabricated mica sheets; and
- the cover is bonded to the core; or
- the core and the cover are sealed within a plastic sheet.

2. The microporous heat insulation body according to claim 1, **characterized in that** the cover consists of a prefabricated mica sheet on both sides.

3. The microporous heat insulation body according to claim 1 or 2, **characterized in that** said further additives are from 0 to 30% by weight of an opacifier, from 0 to 10% by weight of a fibrous material, and from 0 to 15% by weight of an inorganic binder.

4. The microporous heat insulation body according to any of claims 1 to 3, **characterized in that** the core contains from 2 to 45% by weight, preferably from 5 to 15% by weight, of xonottite.

5. The microporous heat insulation body according to any of claims 1 to 4, **characterized in that** the core has a thickness of from 3 to 10 mm, preferably from 5 to 7 mm.

6. A method for preparing a microporous heat insulation body consisting of a core of a compressed heat insulation material containing from 30 to 90% by weight of a finely divided metal oxide and further additives, wherein one or both surfaces thereof have a cover of a heat-resistant material, at least one cover consists of mica, **characterized in that** the mica is a prefabricated sheet which is bonded to the core.

7. The method according to claim 6, **characterized in that** the cover consists of a prefabricated mica sheet on both sides.

8. The method according to claim 6 or 7, **characterized in that** said further additives are from 0 to 30% by weight of an opacifier, from 0 to 10% by weight of a fibrous material, and from 0 to 15% by weight of an inorganic binder.

9. The method according to any of claims 6 to 8, **characterized in that** the core contains from 2 to 45% by weight, preferably from 5 to 15% by weight, of xonotlite.

10. The method according to any of claims 6 to 9, **characterized in that** the core has a thickness of from 3 to 10 mm, preferably from 5 to 7 mm.

11. The method according to any of claims 6 to 10, **characterized in that** the cover is bonded to the core, or the core and the cover are sealed within a plastic sheet.

## Revendications

1. Corps calorifuge microporeux composé d'un noyau constitué par un matériau calorifuge comprimé contenant 30 à 90 % en poids d'oxyde métallique finement fragmenté et d'autres additifs, dans lequel une ou deux surfaces comportent un revêtement constitué d'un matériau résistant aux températures élevées, **caractérisé en ce que** le revêtement est identique ou différent et qu'au moins une face est constituée de feuilles préfabriquées de mica et
- le revêtement est collé au noyau,
- ou le noyau et le revêtement sont soudés en une feuille.

2. Corps calorifuge microporeux selon la revendication 1, **caractérisé en ce que** le revêtement est composé sur les deux faces d'une feuille préfabriquée de mica.

3. Corps calorifuge microporeux selon la revendication 1 ou 2, **caractérisé en ce que** les autres additifs sont constitués de 0 à 30 % en poids d'agent opacifiant, de 0 à 10 % de matériau fibreux et de 0 à 15 % d'agent liant minéral.

4. Corps calorifuge microporeux selon une des revendications de 1 à 3, **caractérisé en ce que** le noyau contient 2 à 45 % en poids, de préférence 5 à 15 % en poids de xonotlite.

5. Corps calorifuge microporeux selon une des revendications de 1 à 4, **caractérisé en ce que** le noyau a une épaisseur de 3 à 10 mm, de préférence de 5 à 7 mm.

6. Procédé de fabrication d'un corps calorifuge microporeux composé d'un noyau constitué d'un matériau calorifuge comprimé contenant 30 à 90 % en poids d'oxyde métallique finement fragmenté, et d'autres additifs, dans lequel une ou deux surfaces comportent un revêtement constitué d'un matériau résistant aux températures élevées, au moins une face étant constituée de mica, **caractérisé en ce que** le mica est une feuille préfabriquée, qui est assemblée avec le noyau.

7. Procédé selon la revendication 6, **caractérisé en ce que** le revêtement des deux faces est constitué d'une feuille de mica préfabriquée.

8. Procédé selon la revendication 6 ou 7, **caractérisé en ce que** les autres additifs sont constitués de 0 à 30 % d'agent opacifiant, de 0 à 10 % de matériau fibreux et de 0 à 15 % d'agent liant minéral.

9. Procédé selon une des revendications de 6 à 8, **caractérisé en ce que** le noyau contient 2 à 45 %, de préférence 5 à 15 % de xonotlite.

10. Procédé selon une des revendications de 6 à 9, **caractérisé en ce que** le noyau a une épaisseur de 3 à 10 mm, de préférence de 5 à 7 mm.

11. Procédé selon une des revendications de 6 à 10, **caractérisé en ce que** le revêtement est collé au noyau ou le noyau et le revêtement sont soudés pour former une feuille.
